## Europäisches Patentamt
## European Patent Office
## Office européen des brevets

(19)

(11) Publication number: **0 170 322**
A2

(12)

# EUROPEAN PATENT APPLICATION

(21) Application number: 85201132.9

(51) Int. Cl.⁴: **B 01 F 13/10**

(22) Date of filing: 09.07.85

---

(30) Priority: **31.07.84 BE 213424**

(43) Date of publication of application:
**05.02.86 Bulletin 86/6**

(84) Designated Contracting States:
**AT IT SE**

(71) Applicant: "National Forge Europe"
Industriepark-Noord 7
B-2700 Sint-Niklaas(BE)

(72) Inventor: Paridaens, Serge
Avenue Maurice Dekeyser 37
B-1090 Bruxelles(BE)

(72) Inventor: Van Belleghem, Jacques
Magnolialaan 1
B-2700 Sint-Niklaas(BE)

(74) Representative: Pieraerts, Jacques et al,
Bureau Gevers S.A. rue de Livourne 7, Bte. 1
B-1050 Bruxelles(BE)

---

(54) Equipment for mixing powder- and/or granule-like components from a body to be compressed under high pressure.

(57) There is described an equipment for mixing at least two powder- and/or granule-like components of a body to be compressed under high pressure, which comprises at least two tanks (1,2) which are each fitted with an outflow (9) for feeding the components to a common cylinder (12) wherein the mixing is performed and from which the components reach a press mould (13).

./...

# EQUIPMENT FOR MIXING POWDER- AND/OR GRANULE-LIKE COMPO-
## NENTS FROM A BODY TO BE COMPRESSED UNDER HIGH PRESSURE

This invention relates to an equipment for mixing at least two powder- and/or granule-like components from a body to be compressed under high pressure.

The invention particularly pertains to an equipment for mixing the powder- and/or granule-like components from which a body to be dipped into a molten steel bath is comprised of. Such a body is generally but not exclusively of cylinder shape, with or without a center hollow extending along the lengthwise axis thereof.

The components from such a cylinder-shaped body are usually calcium and iron, or calcium and nickel.

An absolutely homogeneous mixing of said components to be pressed under high pressure is a requirement for obtaining a body the calcium component of which in the molten steel bath is uniformly absorbed without causing very nefarious phenomenoms which are notably described in U.S.Patent 4,233,064.

There is further encountered the additional problem that the density of said components diverges substantially and the density ratios of both products lie in a range from 1 to 3. The granulometries of both components are also not to be compared with one another. Calcium particles have a diameter about 2 mm, the iron particles usually 150 microns at the most.

The intended object is to obtain when dipping in a molten steel bath, the highest speed whereby the calcium is released in the steel because said body forms a permanent replacement base for the used calcium, and the steel concentration in the steel bath should not rise above the solubility limit.

To obtain this under the best conditions, an uniform mixing of the components from the body to be pressed under very high pressure is of critical importance.

To fill the mould whereon the pressure will be exerted in an isostatic press, in a very uniform and thus homogeneous way, no equipment has been described up to now, which makes it possible to reach the defined object.

The invention has consequently for object to provide an equipment which solves the defined problem in a very efficient way.

According to the invention, the equipment comprises at least two tanks which are each fitted with an outflow for feeding the components to a common cylinder wherein the mixing is performed and from which the components reach a press mould.

In a preferred embodiment, said cylinder and said press mould perform a rotating motion relative to one another.

According to an advantageous embodiment of the invention, the equipment according to the invention comprises two weighing funnels fed from said tanks, which are each mounted on a balance, and which each lead through a discharge the one said components to said common cylinder, whereby means are provided for regulating according to the weight loss of each weighing funnel and of the component parts connected thereto, the feeding of the pertaining component until the required balance between both components has been reached.

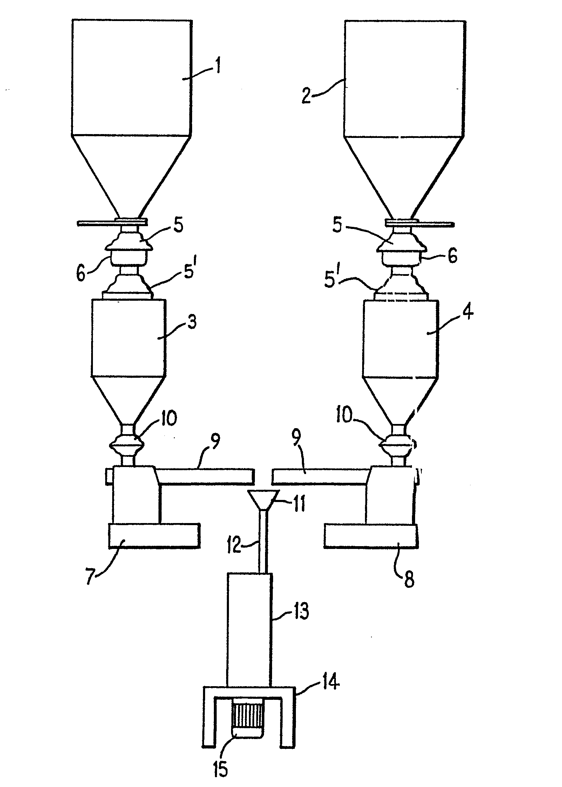

Other details and features of the invention will stand out from the following description, given hereinbelow by way of non limitative example and with reference to the accompanying drawing.

The single figure is a diagrammatic showing of a possible embodiment of the equipment according to the invention.

In the diagrammatic showing, some component parts should be considered as fixed relative to a supporting structure of the equipment, this is first the case for tanks 1 and 2. Said tanks each receive one of the components to be mixed. Tank 1 is for instance filled with 1000 kg powder-like iron, and tank 2 with 250 kg calcium.

Each tank communicates with a weighing funnel. Due to gravity, the powder-like iron falls into weighing funnel 3 and the calcium into weighing funnel 4.

Between tanks 1 and 2 on the one hand, and weighing funnels 3 and 4 on the other hand, is provided a flexible sleeve or tubing 5 with thereunder a feeding apparatus 6 to which can be applied a vibrating or shaking movement, in such a way that the materials fall uniformly due to gravity from the tanks 1 and 2 into the weighing funnels 3 and 4. A second tubing 5' connects each feeding apparatus 6 to the weighing funnels 3 and 4. The feeding apparatus may also be provided with Archimedean screws or conveying belts.

The weighing funnels bear through structures not shown in the drawings, on balances 7 and 8. The weighing funnels 3 and 4 are filled with an amount powder-like iron or calcium which is larger than that amount which is required for composing the body to be compressed.

Between the weighing funnels 3 and 4 and outflows 9 is also provided a sleeve or tubing 10. The outflows 9 are designed as vibrating trough, or are fitted either with an Archimedean screw or a conveying belt, whereby the powder-like materials originating from the weighing funnels 3 and 4, reach a cylinder 12 through a funnel 11.

Inside said cylinder 12, the components are mixed during the common fall thereof. The components to be fed from the weighing funnels 3 and 4, are determined beforehand according to the respective percentage thereof in the final product. It is possible to compute from the weight loss of that unit to which belong the weighing funnels 3 and 4, the tubings 5' and 10, as well as the outflows 9, the amount components fed by both weighing funnels, accurately at any moment during the mixing operation. The discharge of the components through the outflows 9 can be adjusted according to the metering performed by time unit. To make it possible to regulate the feeding of components, one acts on the electric current which controls the vibrating trough, the Archimedean screw, or the conveying belt.

A computer-controlled operating unit records the weight loss as detected per time unit for each one of the weighing funnels 3 and 4, and for the apparatus pertaining thereby and connected thereto, and said unit regulates the flow rate of one or the other outflow 9, whereby the feeding either of the powder-like iron, or the calcium for example, is adjusted until the required balance condition is detected with a further metering.

The required components are metered correctly in this way, with reliable and easily-controlled technical means. The mixing of said components fed with the accurate ratio, occurs inside cylinder 12, while further means are also provided to insure a suitable spreading of the mixture inside mould 13.

A selection can be made therefor between two solutions. The one solution is shown in the diagrammatic figure. In the embodiment as shown, the mould 13, provided or not with a center core extending along the lengthwise axis thereof, bears on a turntable 14 which can be driven by a motor 15. It is to be noted hereby that the center line of mould 13 does not coincide with the center line of cylinder 12. Consequently mould 13 performs a rotating motion about the extension of the center line of cylinder 12, in such a way that the components fed to said cylinder and already mixed, settle along a circle-shaped path inside mould 13.

Another solution not shown in the figure, lies in considering mould 13 as a fixed part and arranging same with the center line thereof in the extension of the center line of cylinder 12. In this case, to cylinder 12 is imparted a gyrating motion, whereby the path followed by said cylinder 12 corresponds to the generating line of a cone. In such a case also, a regular spreading of the mixed materials is insured inside the mould.

To prevent hydrating or oxidizing the components to be mixed, the complete displacement of said components may occur inside an inert gas, such as argon for example.

It did appear from meterings that the homogeneity of the materials discharged into mould 13 is particularly remarkable. Such property is an essential requirement for obtaining a body which after having been compressed under very high pressure, abandons the elements thereof to a molten steel bath in such conditions that no sparks nor disturbing fume gases are generated, and also no explosions occur on the molten metal surface.

It must be understood that the invention is in no way limited to the above embodiments and that many changes may be brought therein without departing from the scope of the invention as defined by the appended claims.

CLAIMS

1. Equipment for mixing at least two powder-and/or granule-like components of a body to be compressed under high pressure, which comprises at least two tanks (1,2) which are each fitted with an outflow (9) for feeding the components to a common cylinder (12) wherein the mixing is performed and from which the components reach a press mould (13).

2. Equipment as defined in claim 1, in which said common cylinder (12) and said press mould (13) perform a rotating motion relative to one another.

3. Equipment as defined in claim 1, which further comprises two weighing funnels (3,4) fed from said tanks (1,2), which are each mounted on a balance (7,8), and which each lead through an outflow (9) the one said components to said common cylinder (12), whereby means are provided for regulating according to the weight loss of each weighing funnel and of the component parts connected thereto, the feeding of the pertaining component until the required balance between both components has been reached.

4. Equipment as defined in claim 3, in which each said tanks (1,2) is connected to the corresponding weighing funnels (3,4) through at least one flexible sleeve or tubing (5).

5. Equipment as defined in either one of claims 3 and 4, in which said outflow (9) is designed as vibrating trough.

6. Equipment as defined in either one of claims 3 and 4, in which said outflow (9) is fitted with an Archimedean screw.

7. Equipment as defined in either one of claims 3 and 4, in which said outflow (9) is fitted with a conveying belt.

8. Equipment as defined in any one of claims 1-7, in which each outflow (9) is connected to the corresponding weighing funnel (3,4) through a flexible sleeve or tubing (10).

9. Equipment as defined in any one of claims 1-8, in which said common cylinder (12) discharges the components received from the outflows (9), into a mould (13) wherein said components will be compressed, in such a way that the discharged components come to lie about the geometrical axis of said mould.

10. Equipment as defined in claim 9, which is further provided with a turntable (14) whereon bears said mould (13), in such a way that the center line of said cylinder falls outside the center line of said mould (13).

11. Equipment as defined in claim 9, in which to said cylinder (12) is imparted a gyrating motion, in such a way that the discharged components come to lie on a circle-shaped path inside said mould (13).

12. Equipment as defined in any one of claims 1-11, in which for preventing hydrating or oxidizing, the displacement of said components occurs inside an inert gas.